# EUROPEAN PATENT SPECIFICATION

(11) **EP 4 001 630 B1**
(45) Date of publication and mention of the grant of the patent: **29.04.2026**
(21) Application number: 20857938.3
(22) Date of filing: 17.08.2020
(51) Int. Cl.: F02M 27/04, F02M 69/00, F02M 35/10

(54) **FUEL DROPLET MINIATURIZATION DEVICE**
VORRICHTUNG ZUR MINIATURISIERUNG VON BRENNSTOFFTRÖPFCHEN
DISPOSITIF DE MINIATURISATION DE GOUTTELETTES DE COMBUSTIBLE

(30) Priority: 23.08.2019 JP 2019153256
(43) Date of publication of application: 25.05.2022
(73) Proprietor: Saito, Fuminori, Koganei City, Tokyo 184-0012 (JP); Ikeda, Tokihiro, Hiki-gun Saitama 350-0136 (JP)
(72) Inventor: Saito, Fuminori, Koganei City, Tokyo 184-0012 (JP); Ikeda, Tokihiro, Hiki-gun Saitama 350-0136 (JP)
(74) Representative: HWP Intellectual Property
(86) International application number: PCT/JP2020/030954
(87) International publication number: WO 2021/039459

(56) References cited:
- WO-A1-2016/108765
- FR-A1- 2 264 983
- FR-A1- 2 488 656
- JP-A- 2004 301 099
- JP-A- H05 321 778
- JP-A- S5 596 356
- US-A- 4 094 290
- US-A- 4 253 441
- US-A1- 2010 024 783
- US-A1- 2011 030 636

## Description

### Technical field:

The present invention relates to a device for micronizing a fuel droplet ejected from a carburetor or an injector used for internal combustion engines (engine).

### Background art:

In order to enhance the thermal efficiency of internal combustion engines, the amount of air put into a combustion chamber should be as much as possible. Consequently, fuel is fed into the combustion chamber as fuel droplet for the diminution of the volume rate of the fuel in the combustion chamber. The present engines are designed for the fuel ejected from a carburetor or a port fuel injector to be pulverized to micro-droplet in an intake tube or the combustion chamber by collisions with the molecules in air and to be distributed homogeneously in the combustion chamber. In the combustion chamber, the vapor of the fuel and the fuel droplet in the mixture gas kindle, if the ambient temperature reaches ignition point with the propagation of the combustion wave derived from the ignition (see Non-patent Document 1).

With the droplet in a small diameter, which can receive heat effectively from the surroundings owing to large surface area per volume (specific surface area) and are ready to give rise to chemical reaction with oxygen molecules for a large contact area, the velocity of the combustion wave is enhanced, so that combustion efficiency in the combustion chamber is assumed to become large.

The interval for the micronization and the vaporization of the fuel droplet becomes short with the rotation rate of the engine, the power and the torque cannot be obtained as much as expected owing to the increase of the amount of the exhaustion of unburned fuel. Moreover, the size of the fuel droplet ejected from the carburetor or the port fuel injector is distributed in a considerable range and the size (diameter) of the droplet fluctuates at every ejection, whereby the output and the revolution of the engine fluctuate. As to the size of the fuel droplet, there is enough ground for investigation and improvement still more.

The inventers discovered that the fuel droplet become charged (flow electrification) before reaching the combustion chamber by the friction with the feeding tube or the ejection tube on the ejection (see Patent Document 1). Owing to the Coulomb attraction working between electrons and the dielectric polarized molecules, the cohesive strength of the charged fuel droplet becomes larger in comparison to that of the electrically neutral one (see Non-patent Document 2). Therefore, the charged fuel should be difficult to be broken by collision and hard to be vaporized in a cylinder.

An apparatus for reducing the size of fuel particles injected into a combustion chamber is described in US 2010/024783 A1. The apparatus includes a fuel line, a first metallic mesh disposed within the fuel line, and a second metallic mesh disposed within the fuel line, upstream of the first metallic mesh. An electrical supply is electrically coupled to the first metallic mesh and the second metallic mesh. Operation of the electrical supply generates an electrical field between the first metallic mesh and the second metallic mesh. A fuel injector is disposed at an end of the fuel line, downstream from the first metallic mesh. Methods of reducing the size of fuel particles, improving gas mileage in a vehicle, increasing power output from a combustion engine, and improving emissions for a combustion engine are also provided.

US 4,253,441 A describes a fuel supply system for a multi-cylinder internal combustion engine,. The system comprises an intake passageway which is provided therein with a throttle valve, a fuel injector whose nozzle is located in the intake passageway downstream of the throttle valve, and a fuel reflector against which at least a part of the fuel injected from the fuel injector strikes to be reflected, the fuel reflector being located opposite to the nozzle tip of said fuel injector, so that fuel distribution to a plurality of engine cylinders can be uniformalized.

A fuel conditioner ionizer, interposed in a fuel line leading to an engine or a furnace, is described in US 2011/030636 A1 and includes a housing, an inlet sealed to the fuel supply line and an outlet sealed to the fuel line leading to the engine or furnace. A plurality of metal wire strands from the plurality of different metals is disposed in the housing. Angular and directional fuel flow is generated by a fluid mixing device mounted in the housing. The mixer is a stationary turbine with a plurality of radially extending blades, circumferentially disposed in the housing. Improvements include an annular ring holding the blades, a central hub in the ring and additional or secondary flow directing blades. A cone or frustoconical segment may be attached or be part of the forward end of the hub to direct the fuel radially outward.

US 4,094,290 A describes a device mountable between the carburetor and intake manifold of an internal combustion engine through which the air-fuel mixture from the carburetor passes and including superposed wire screens with balls therebetween which creates a whirling mass of a highly volatile vapor of said mixture entering the manifold to cause a maximum combustion of said mixture in the engine cylinders.

An economizer particularly for automobile engines is described in FR 2 264 983 A1 and consists of a filter mounted in the path of the fuel/air mixture emerging from the carburetor and typically in the form of a strainer or perforated plate clamped along the edge between carburetor and inlet manifold. It can have a peripheral frame shaped to fit against carburetor and manifold mating faces, and of sealing material such as plastic. It can curve towards the manifold in the center, to allow freedom of movement to the throttle butterfly. The material of the perforated plate causes a catalytic action on the fuel air mixture to improve combustion.

FR 2 488 656 A1 describes a filter insert which is clamped between the carburetor outlet and the suction manifold. It is a thin assembly which can be put between two flanges on an existing engine and consists of a set of three discs with wire sheets positioned between them. The sheets can be arranged so that the wires are either parallel or inclined to each other. The choice of mesh and orientation gives a wide range of opening size through which the fuel air mixture flows.

Finally, an engine combustion system oxygen efficiency enhancing device with raised electrical voltage and improved installation method is described in WO 2016/108765 A1 and is composed of a frequency generator with one side connected to the car's electrical supply serving to generate high voltage half-wave frequency. The transformer connected to the frequency generator serves to receive voltage from the frequency generator and convert voltage into high voltage - Level 1 = 1,000-8,000 Volts or Level 2 = 8,0001-15,000 Volts, or Level 3 15,001-20,000 Volts, or Level 4 20,001 - 30,000 Volts, or Level 5 30,001 - 60,000 Volts, and the electrical current is set at 0.0024 - 0.00004 Amperes through an electrical wire or metallic conductor into the air duct.

### Prior Art

### Patent Documents

Patent Document 1 : WO2020/145184

### Non-patent Documents

Non-patent Document 1: Advanced engine technology, Heintz Heisler, 2009, Butterworth-Heinemann
Non-patent Document 2: Intermolecular and Surface Forces (second edition); Jacob N. Israelachvili, 1992, Academic press,(translated version) 1996, Asakura, Tokyo, Japan, Summary of the invention:

### Problems to be solved by the invention:

In order to actualize high thermal efficiency and large power/torque of an internal combustion engine, the fuel droplet ejected from an ejection apparatus should be micronized quickly and vaporized easily in the cylinder, whereby the combustion efficiency should be enhanced.

The present invention is an apparatus aims for provide a fuel droplet micronizer for the enhancement of the output and the stabilization of the internal combustion engine, wherein the fuel droplet can be micronized efficiently by restraining the effect of the flow electrification.

### Means to solve the problems:

The above problem is solved by a fuel droplet micronizer for pulverizing the fuel droplet fed to an internal combustion engine according to independent claim 1.

According to the invention, the fuel droplet micronizer for pulverizing the fuel droplet fed to an internal combustion engine comprises a micronization assistance part composed of one or plural filament-like materials parallel to each other, and a ring for fixing the both ends of the filament-like materials, wherein the fuel droplet micronizer is placed in an intake tube feeding the mixture of air and the fuel droplet ejected from an ejection apparatus into the internal combustion engine, and is installed between an ejection port of the fuel ejection apparatus for ejecting the fuel droplet into the intake tube and an end of the intake tube , and the micronization assistance part is disposed in a plane perpendicular to the axis of the intake tube, and the micronization assistance part covers the cross-section of the intake tube so that the fuel droplets in the mixture are pulverized by colliding with the micronization assistance part and are then fed to the internal combustion engine, wherein the micronization assistance part is made of tungsten filaments and the ring is made of copper, and the micronization assistance part is electrically connected with an electric source in order to keep the electric potential of the micronization assistance part higher than the electric potential of the intake tube.

One example is a fuel droplet micronizer that micronizes the fuel droplet fed to a internal combustion engines, wherein one or plural filament-like or mesh-like micronization assistance parts are equipped, whereby the fuel droplet as mentioned above are collided with the micronization assistance part to be pulverized and fed to the internal combustion engine.

The micronization assistance part is composed of wires, mesh-like sheet or ribbons and so forth made of metals, semiconductors, polymers, ceramics or glasses etc. This micronization assistance part collides with the fuel droplet fed to the engine. By this impact, the fuel droplet are broken into micro-droplet and sprinkled in the combustion chamber of the engine. Because the range of fluctuation of the fuel droplet diameter is reduced with micronization, a burning velocity of the internal combustion engine becomes stable to cause a stable output.

Another example of the fuel droplet micronizer is the fuel droplet micronizer whereof the micronization assistance part is made of conductors or semiconductors.

In the case of the micronization assistance part is made of conductors or semiconductors, the charges generated on the fuel droplet by the flow electrification on the ejection are leaked to the micronization assistance part and lost when the fuel droplet collide with the micronization assistance part mentioned above. Therefore, the cohesive strength of the micronized fuel droplet is reduced, so that the combustion efficiency in the combustion chamber is enhanced.

Another example of the fuel droplet micronizer is the fuel droplet micronizer whereof the micronization assistance part is situated inside of an intake tube feeding the mixture of air and the fuel droplet ejected from the ejection apparatus into the internal combustion engine and placed between the ejection port of the fuel ejection apparatus for ejecting the fuel droplet into the intake tube and the end of the intake tube feeding the mixture of air and the fuel into the internal combustion engine, where the micronization assistance part is electrically connected with the internal combustion engine, the carburetor or the ejection apparatus.

In the case of the micronization assistance part is made of metals or semiconductors, the electric capacity of the micronization assistance part is increased by electrically connected with the internal combustion engine, the carburetor or the ejection apparatus and so forth, whereby the potential of the micronization assistance part is hardly reduced even though the charges transfer from the fuel droplet.

Another example of the fuel droplet micronizer is the fuel droplet micronizer where the micronization assistance part is situated inside of an intake tube feeding the mixture of air and the fuel droplet ejected from the ejection apparatus into the internal combustion engine and placed between the ejection port of the fuel ejection apparatus for ejecting the fuel droplet into the intake tube and the end of the intake tube feeding the mixture of air and the fuel into the internal combustion engine, where the potential of the micronization assistance part is regulated to be higher than that of the intake tube.

In the case of the micronization assistance part is made of metals or semiconductors, owing to the regulation of the potential of the micronization assistance part to be high, the collision probability of the flow-electrified fuel droplet with the micronization assistance part is increased and the micronization is enhanced because the fuel droplet are accelerated and collided with the micronization assistance part with a high velocity.

### Advantages of the invention

The present invention can pulverize the fuel liquid to micro-droplet efficiently, whereby the enhancement and the stabilization of the output of the internal combustion engine are progressed.

### Brief description of drawings:

(Fig.1) is a diagram of the change in the distribution of the diameter of the droplet concerning the present invention.
(Fig.2A) is a cross sectional view of the fuel droplet micronizer concerning the embodiment 1.
(Fig.2B) is an ichnography of the fuel droplet micronizer.
(Fig.3) is a cross sectional view of the fuel droplet micronizer concerning the embodiment 2.
(Fig.4) is a figure demonstrating the potential change of the fuel droplet micronizer.
(Fig.5) is a figure to show how the period of the engine sound is decided.
(Fig.6) is the figure to show the waveform of the engine sound at the middle range of revolution.
(Fig.7) is the figure to show the waveform with the engine sound at the top range of revolution.
(Fig.8) is the power spectra of the induction process, the compression process, the combustion process and the exhaust process at the middle range of revolution.
(Fig.9) is the power spectra of the induction process, the compression process, the combustion process and the exhaust process at the top range of revolution.

### Forms for embodiments of the invention:

As to the internal combustion engine, in order to enhance the ratio of the burned fuel to the fed fuel, namely, increase the combustion efficiency of the fuel, sufficient oxygen and the fuel should be fed into the combustion chamber in a very short time.

In the case of the micronization of the fuel droplet by installing the micronization assistance part in order to collide with the fuel droplet ejected from the port of the carburetor or the fuel ejection apparatus in the intake tube whereby the fuel and air are fed, the conductance, namely, the facility of gas flow in the intake tube is reduced. The actualization of high collision probability between the fuel droplet and the micronization assistance part is incompatible with the actualization of the large conductance of the intake tube.

In the fuel droplet micronizer of the present invention, this incompatible is settled by contriving the configuration of the micronization assistance part installed in the intake tube.

The micronization assistance parts are made of metals, semiconductors, polymer, ceramics or glasses and shaped filaments, mesh-like sheets or ribbons. Polymers coated by metals shaped into the above-mentioned configuration may be well.

Application of the filament-like, ribbon-like or mesh-like materials to the micronization assistance part can reduce a decline in the conductance of the intake tube.

The mesh-like sheets are shaped with a mold or laser processing.

The stability of the power of the internal combustion engines is one of the important elements of performance, especially, when the applied load on the internal engines fluctuates like automobiles, which decides the stability and comfortability of driving.

Since the diameter of the fuel droplet ejected from the fuel ejection apparatus has the range of distribution, the distribution of the diameter of the fuel droplet of every ejection is presumed to fluctuate within the range of the distribution.

If the fuel droplet are pulverized by the fuel droplet micronizer of the present invention, where by the number of the fuel droplet is increased and the diameter of the droplet is decreased, the range of the fluctuation of the fuel droplet diameter, simply, the range of the distribution of the diameter, is reduced.

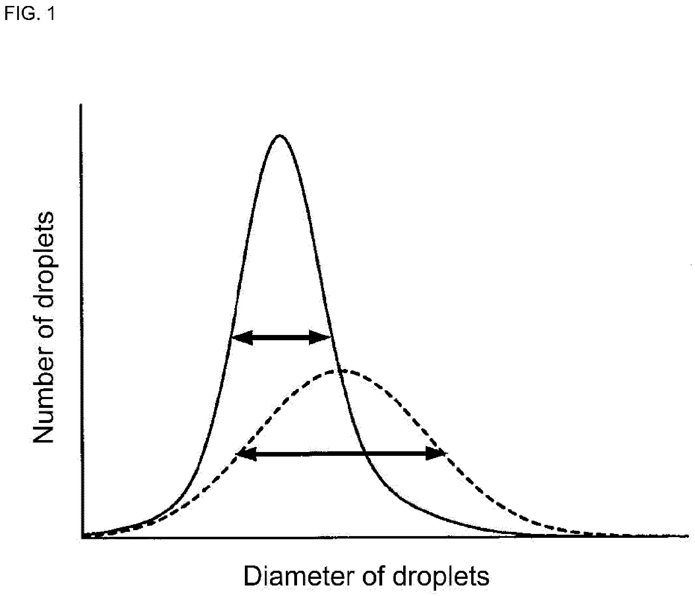

Fig.1 shows the distribution of the number of the fuel droplet as a function of the diameter of the fuel droplet. The broken line designates the distribution of the number of the ejected fuel droplet and the solid line designates the distribution of the number of the micro-droplet after the pulverization of the ejected droplet. Thus, the range of the fluctuation of the diameter is reduced by pulverizing, namely, making the diameter of the droplet small.

The fluctuation range of the diameter of the droplet of each ejection is assumed to be limited within the full width half maximum (FWHM) of the distribution. Therefore, as the droplet are micronized, the fluctuation range of the diameter of droplet becomes small.

Because the velocity of the combustion wave depends on the distribution of the size (diameter) of the fuel droplet, the combustion velocity becomes stable and the stable power, namely, the power with a small fluctuation is actualized with the reduction of the fluctuation of the distribution.

Furthermore, the fuel liquid is turned to the micro-droplet, whereby the area per unit volume or unit mass, namely, specific area, becomes large, so that the combustion efficiency is enhanced. It is well known that the micronized fuel droplet burns explosively. The fact that even solid materials pulverized to particles and dispersed in air explode by ignition is known as a dust explosion at a coal mine or a flour mill.

The materials for the micronization assistance part should be a material whereof electric conductivity and thermal conductivity are high.

In the case of the micronization assistance part is shaped of the materials with a high electric conductivity, the electric charges contained in the fuel droplet by flow electrification before the collision with this micronization assistance part can be leaked through it on the collision.

Thus, the Coulomb attraction acting between the electrons contained in the fuel droplet and the dielectric polarized molecules becomes small and the cohesive strength of the fuel droplet is diminished, whereby the disruption of the fuel droplet by the collisions with oxygen molecules or nitrogen molecules is easily brought, therefore the combustion efficiency in the combustion chamber is enhanced.

In addition, in this case, it is desirable that the electric capacity of the micronization assistance part is increased by the electrical connection of the micronization assistance part with the conductors outside, for example, an internal combustion engine, a carburetor or a fuel ejection apparatus and so forth.

If the micronization assistance part is insulated from the other conductors, it becomes negatively charged by the accumulation of the charges transferring from the colliding fuel droplet. Thus, the Coulomb repulsion between the micronization assistance part and the fuel droplet should reduce the possibility of the collision between them.

The enhancement of the electric capacity of the micronization assistance part by connecting with the conductors outside can lighten the Coulomb repulsion.

In addition, in the case of the micronization assistance part is shaped of the materials with a high electric conductivity, the pulverization of the flow-electrified fuel droplet is accelerated further by connecting the micronization assistance part with an electric source in order to keep its potential high.

If the potential of the micronization assistance part is kept positive, the fuel droplet negatively charged by flow electrification are pulled toward the micronization assistance part by the Coulomb attraction and the probability of collision between them becomes large. In addition, the fuel droplet accelerated by the Coulomb attraction collide with the micronization assistance part with a high velocity, so that the pulverization and the scatter of the fuel droplets are enhanced.

In addition, in the case of the micronization assistance part is shaped of the materials with a high thermal conductivity, it is also desirable that the micronization assistance part is connected with the internal combustion engine, the carburetor or the fuel ejection apparatus outside and so forth, whereby the effect of the latent heat of the vaporization of the colliding fuel droplet is reduced.

If a part of the fuel droplet colliding with the micronization assistance part are vaporized, the latent heat is ridded of the micronization assistance part. Thus, the temperature of the micronization assistance part is decreased, whereby desorption of the fuel droplet adsorbed to the micronization assistance part should be delayed and the efficiency of combustion is diminished.

However, the micronization assistance part is shaped of the materials with a high thermal conductivity and connected to the good conductors with a large heat capacity outside, the decline of the temperature of the micronization assistance part can be avoidable.

In the above mentioned patent (Patent Document 1), a micro-droplet ejection apparatus characterized by the diminution of the potential increase with the enhancement of the electric capacity of an ejection port is presented, however, the micronization assistance part used in the present invention is not presented.

In the embodiment of this patent (Patent Document 1), the volume ranging from 3.5 mm³ to 6.9 mm³ of fuel is ejected at every induction process with divided into the average of 16 droplet. Supposing the droplet is spherical, the diameter is estimated to be ranging from 1.8 mm to 2.4 mm.

Therefore, the micronization of the fuel drop can be actualized by using plural filaments placed parallel with a distance of about 2 mm or a mesh-like material of about 13 mesh/inch as a micronization assistance part.

In addition, , instead of the full covering of the cross section of the intake tube by the micronization assistance part, the partial covering of the cross section of the intake tube does well to lighten the diminution of the conductivity of the intake tube.

In addition, in the case of the diminution of the conductivity of the intake tube is a serious problem, the increase of the diameter of the intake tube where the micronization assistance part is equipped may be effective to supply a sufficient amount of air to the combustion chamber in a short time.

Hereinafter, embodiments of the present invention are described by referring to an embodiment.

### Embodiment

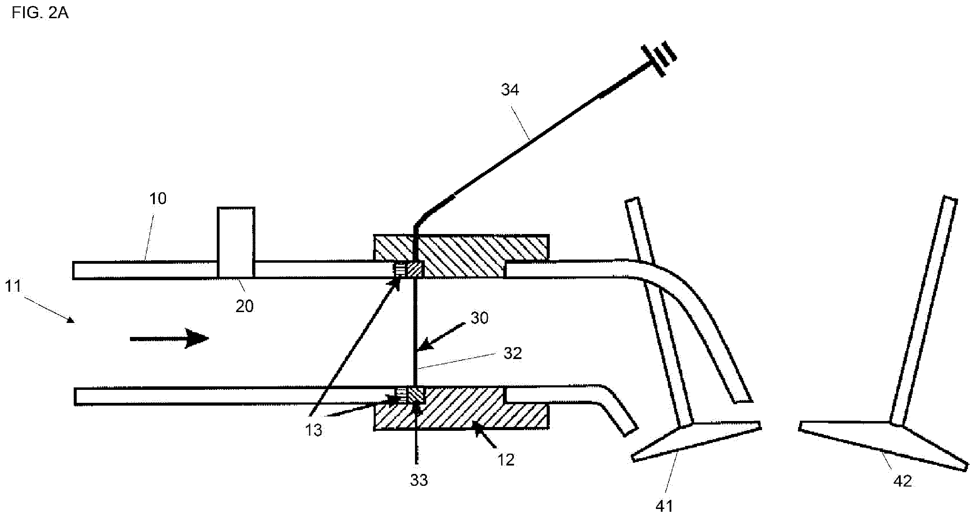

Fig.2A shows the embodiment 1 of the fuel droplet micronizer 30 placed inside the intake tube 10 whereby the mixture of air and the fuel droplet is transferred to the combustion chamber of the engine.

The mixture of air flowing from the intake port 11 of the intake tube 10 and the fuel droplet ejected from the ejection port 20, which is connected to the intake tube 10, of the fuel ejection apparatus is fed to the combustion chamber through the intake tube 10.

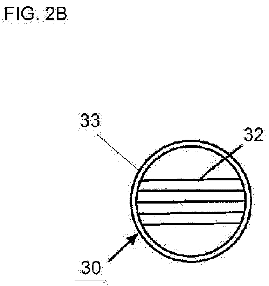

The fuel droplet micronizer 30 placed at the downstream of the ejection port 20 in the intake tube 10 is assembled from a micronization assistance part 32 composed of plural tungsten filaments crossing the direction of the flow of the mixture of air and the fuel, a copper fixing ring 33 for fixing the both ends of the plural tungsten filaments parallel each other and a leading wire 34 to connect the copper ring 33 with the conductors outside as shown in fig.2B.

In addition, the parts to support the fuel droplet micronizer 30 at the middle of the intake tube 10 is composed of an insulator ring 13 isolating the copper fixing ring 33 from the intake tube 10 and an insulator tube 12 connected with the intake tube 10 to hold the fuel droplet micronizer 30 intervening between the insulator tube 12 and the insulator ring 13.

Just to be sure, number 41 and number 42 indicate the intake valve and the exhaust valve of the combustion chamber, respectively. When the combustion chamber is sealed off, the end of the intake tube on the combustion chamber is closed with the intake valve 41.

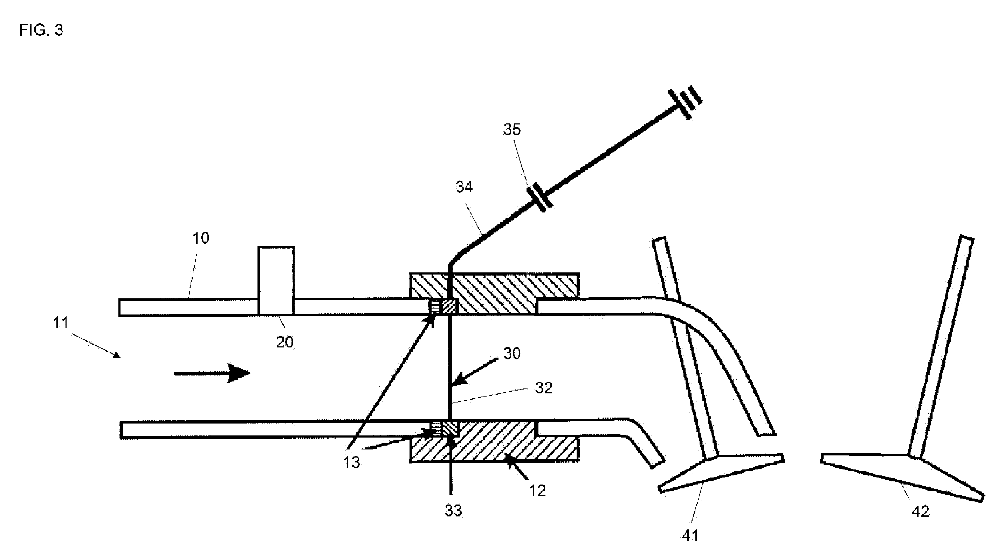

Fig.3 shows the embodiment 2 of the fuel droplet micronizer 30.

In this fuel droplet micronizer 30, a dry cell battery 35 is connected to the copper fixing ring 33 anchoring the plural tungsten filaments of the micronization assistance part, which keeps the potential of the copper fixing ring 33 and the micronization assistance part 32 high. The other composition is the same as fig.2A and fig.2B.

Herein after, the measurements performed to examine the effect of the fuel droplet micronizer of the present invention is described.

These measurements were performed using the apparatuses shown in fig.2A, fig.2B and fig.3. In these apparatuses, five tungsten filaments 32 with a diameter of 0.4 mm are fixed with a distance of 2.4 mm like a bamboo blind to the copper fixing ring 33, which was placed 4 cm downstream from the ejection port 20 equipped in the intake tube 10. The diameter of the copper fixing ring with a width of 2 mm 33 was 33 mm as same as that of the intake tube 10.

Just to be sure, in comparison to a filament of SUS16, the tungsten filament 32 is 700 N/mm² in tensile strength which is larger over 6 times, 4.9 × 10⁻⁸ Ωm in electric conductivity which is smaller below 1.4 times, and 177/W/mT in heat conductivity which is larger over 10 times.

Then, the four conditions of the measurements of the sound of the engine are described below.
(1) The condition; the carburetor was insulated from the engine without the fuel droplet micronizer
(2) The condition; the carburetor was connected with the engine without the fuel droplet micronizer
(3) The condition; the fuel droplet micronizer was equipped and grounded to earth with the carburetor and the engine
(4) The condition; the equipped fuel droplet micronizer was applied a voltage of 9 V to become higher than the carburetor and the engine grounded to earth

Just to be sure, an engine can be considered as an apparatus to transform a part of the energy generated from the combustion of fuel to acoustic energy, therefore the state of the induction, the combustion and the exhaust of the engine can be assessed by the measurements of the sound of the engine.

In addition to performing the measurements of the sound of the engine, the potential of the fuel droplet micronizer insulated from the carburetor and the engine was measured simultaneously. In the coincidence measurements, the resolution of frequency becomes low due to the decrease of sampling rate for the restriction of the memory capacity of the oscilloscope. The data of the coincidence measurements were used to confirm the accordance between the period of potential and that of sound, furthermore, estimate the starting time of the induction process from the potential and that from the waveform roughly.

Then, in order to demonstrate the enhancement of the energy of sound is derived from the increase of the energy generated in the combustion process, the power spectra of the combustion process were investigated.

These measurements were performed using the apparatuses described below.

An oscilloscope (Picoscope 6 5444B, Pico Technology) and a condenser microphone (EMM-6, Dayton Audio) was used for the measurements of the sound of the engine.

The measurements of potential was performed using the oscilloscope with connecting a passive probe (TA045, Pico Technology) to the fuel droplet micronizer.

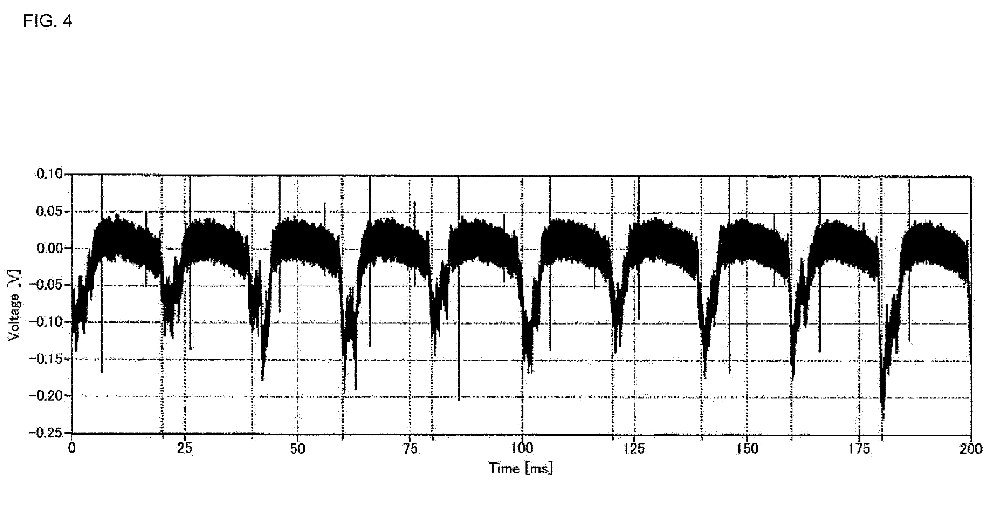

Fig.4 shows the results of the measurements of potential with the fuel droplet micronizer insulated from the carburetor and the engine. In fig.4, an ordinate denotes potential (voltage) [V] and an abscissa shows time [ms].

It is evident that the potential descends periodically. The period of the potential descent is similar to the period of 19.98 ms with the sound of the engine measured coincidentally. The revolution rate of the engine derived from the period is 6000 rpm.

The descent of potential is presumed that the negatively charged fuel droplet collided with the micronization assistance part, whereby electrons were transferred to the tungsten filaments. The time range of the potential descent is similar to the interval of the induction process.

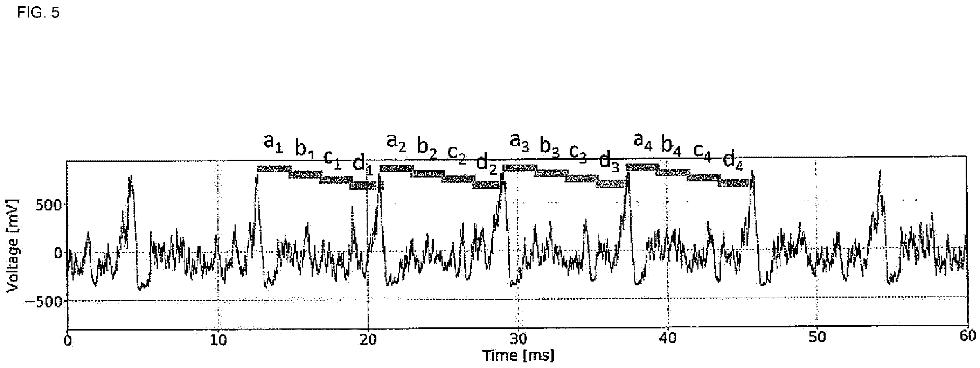

Fig.5 shows the waveform of the pressure of sound (transformed to voltage by the microphone) measured in the condition of described in (3) (where the fuel droplet micronizer was set and the carburetor and the engine was grounded). In fig.5 an ordinate denotes voltage [V] and an abscissa shows time [ms].

In the analyses of sound, first the period was obtained from the intervals of the distinctive five peaks in the waveform of the sound pressure. In fig.5, the short intervals obtained by fitting with the supposed starting time of the induction process and the period are also shown. The period shown in fig.5 is 8.19 ms (14700 rpm).

In analyses, power spectra as functions of frequency obtained by Fourier transform of the waveform of functions of time were compared each other and investigated. Just to be sure, the analyses of power spectra were performed with the data of the engine sound measured singly.

Because the source of the power of the engine sound is the power generated by the burning of the fuel, the magnitude of the power of the engine sound correlates positively with the combustion energy. Therefore if the power of the engine sound was large, we should conclude that a large amount of the fuel burned and a large power was generated by the combustion.

In order to analyze the engine sound, the power spectra of the induction process, the compression process, the combustion process and the exhaust process are obtained as follows.

Assuming that the period of each process was identical, one period of a cycle was divided into four short ones, whereby 16 short intervals for four periods of cycles were obtained. The four intervals in one cycle was labelled with a, b, c and d in due order with a suffix from 1 to 4 denoting every four cycles, whereby induction processes were designated by a₁, a₂, a₃ and a₄, and those of compression processes by b₁, b₂, b₃ and b₄. Combustion process and exhaustion process were the same. In fig.5, the each short intervals of four cycles are denoted by stair-like bars on the waveform.

In order to obtain the power spectra, the calculations for the induction process, the compression process, the combustion process and the exhaust process were simultaneously performed with considering the four short intervals of each cycles (by way of example, denoted as a₁, a₂, a₃ and a₄ in the induction process) to be a continuous interval. The reason why fitting was performed with the four short intervals of each cycles to be continuous is to enhance the resolution of frequency by elongating the analytic interval.

The period is obtained from the intervals of the distinctive peaks of in the waveform, the starting time of the induction process is unknown. Then the starting time of the fitting is changed iteratively, the power spectra of the induction process, the compression process, the combustion process and the exhaust process were calculated, wherein the starting time that satisfies the following conditions is decided to be the starting time of the induction process:
(1) The power of the compression process is the minimum (Both the intake valve and the exhaust valve are closed and no energy is newly generated).
(2) Component/components of frequency changes, if any, where one process displaces the next.

Here, the results of the analyses with the engine sound are described.

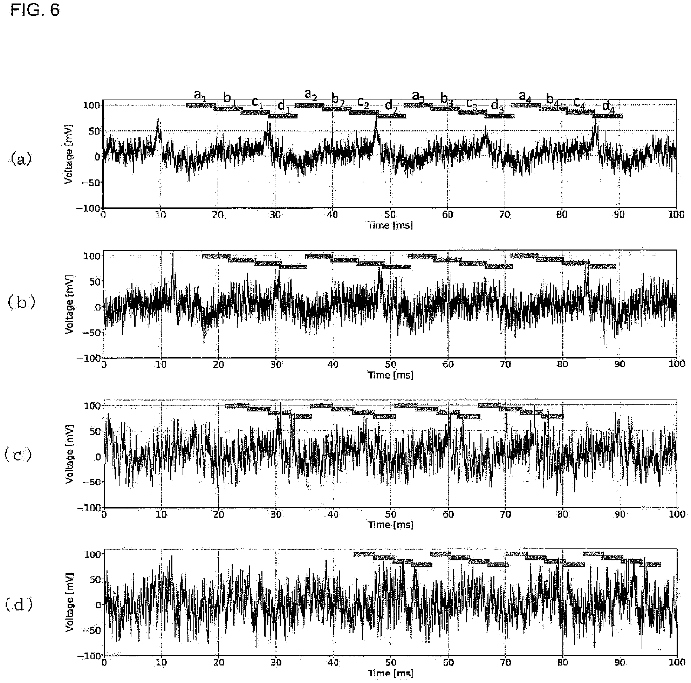

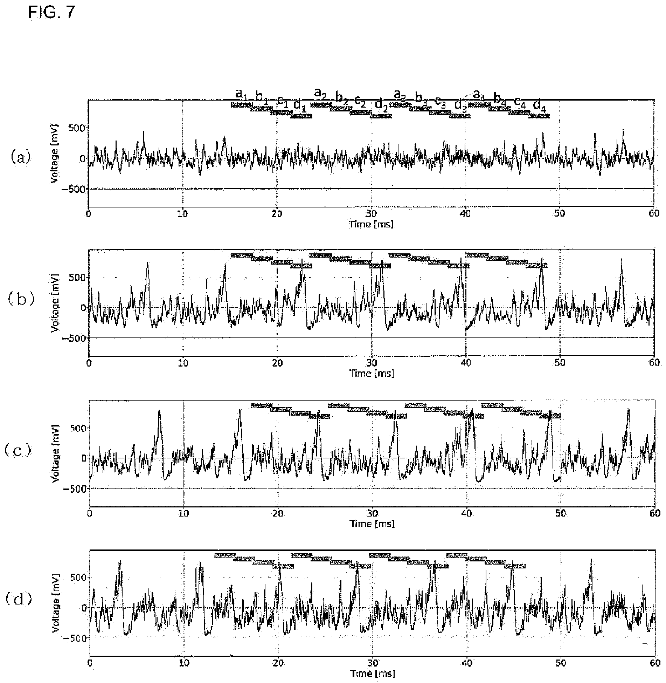

Fig.6 and fig.7 show the waveform measured in the revolution rate of raging from 6000 rpm to 9000 rpm (medium revolution range) and in the revolution rate of about 14000 rpm (high revolution range), respectively. An ordinate shows voltage [V] and an abscissa denotes time [ms]. In these figures, the short intervals obtained by the fitting with the definite starting time of the induction process and the period are also shown.

In fig.6 and fig.7, (a) shows the result obtained by the measurements in the aforementioned condition (1) (with the fuel droplet micronizer unequipped and the carburetor insulated from the engine), and (b) shows the result obtained by the measurements in the aforementioned condition (2) ( with the fuel droplet micronizer unequipped and both the carburetor and the engine earthed), (c) shows the result obtained by the measurements in the aforementioned condition (3) (with the fuel droplet micronizer equipped and both the carburetor and the engine earthed) and (d) shows the result obtained by the measurements in the aforementioned condition (4) (with the fuel droplet micronizer equipped and applied a voltage of 9 V with the carburetor and the engine earthed).

The period of fig.6 (a) is 18.9 ms (6300 rpm), that of fig.6 (b) is 17.9 ms (6700 rpm), that of fig.6 (c) is 14.64 ms (8200 rpm) and that of fig.6 (d) is 13.31 ms (9000 rpm).

The amplitude of the waveform in fig.6 (b) where the carburetor was connected with the engine becomes significantly larger than that in fig.6 (a) where the carburetor was insulated from the engine. In addition, the amplitude of the waveform in fig.6 (c), where the fuel droplet micronizer was equipped and both the carburetor and the engine are earthed, is increased further and in fig.6 (d), where the potential of the fuel droplet micronizer was applied a voltage of 9 V, the amplitude is increased further more than that in fig.6 (c). The increase of the amplitude indicates the enhancement of the energy of sound.

The period of fig.7 (a) is 8.18 ms (14700 rpm), that of fig.7 (b) is 8.32 ms (14400 rpm), that of fig.7 (c) is 8.16 ms (14700 rpm) and that of fig.7 (d) is 8.18 ms (14700 rpm).

The amplitude of the waveform is increased in turns from fig.7 (a) to fig.7 (d), and the degree of the increase is more significant than that in fig.6.

In addition, the characteristic waveforms in the every short interval can be seen obviously in fig.7 (b), fig.7 (c) and fig.7 (d), though they are seen partially in fig.7 (a). The appearance of the characteristic waveforms should demonstrate that combustion occurs periodically/regularly, namely, becomes stable, whereby the comfortability of driving is resulted.

The measurements were performed in the condition of applying no load. During the driving an automobile, the load on the engine fluctuates unceasingly. The fluctuation of the output is amplified further by being added the fluctuation of the load to that of the output, whereby the stability and the comfortability of the driving should be hindered.

Therefore the stabilization of the combustion shown in fig.7 (c) and fig.7 (d) is extremely important.

Next, the power spectra obtained from the analyses of the sound of the engine are described.

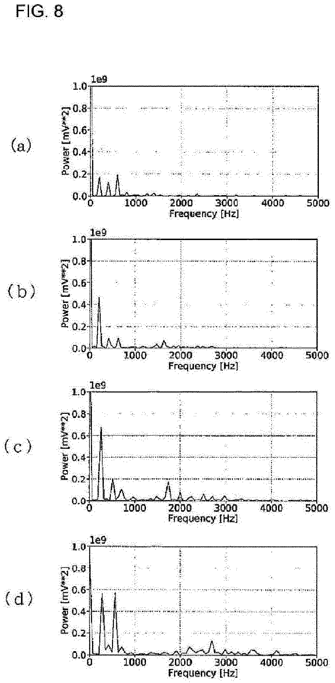

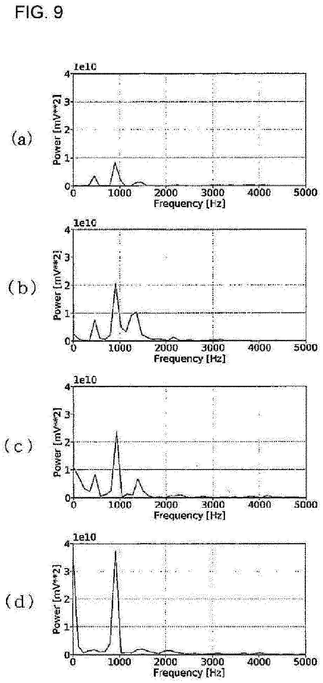

Fig.8 and fig.9 show the power spectra of the medium revolution range and the top revolution range, respectively. Both data are obtained from the above mentioned calculation. In fig.8 and fig.9, the abscissa and the ordinate denotes frequency [Hz] and power, respectively.

In fig.8 and fig.9, (a) shows the power spectra in the aforementioned condition (1) (where the fuel droplet micronizer was not equipped and the carburetor insulated from the engine), and (b) shows those in the aforementioned condition (2) ( where the fuel droplet micronizer was not equipped and both the carburetor and the engine were grounded), (c) shows those in the aforementioned condition (3) (where the fuel droplet micronizer was equipped and both the carburetor and the engine were grounded) and (d) shows those in the aforementioned condition (4) (where the fuel droplet micronizer was applied a voltage of 9 V and both the carburetor and the engine were grounded)

The period of fig.8 (a) is 18.9 ms (6300 rpm), that of fig.8 (b) is 17.9 ms (6700 rpm), that of fig.8 (c) is 14.64 ms (8200 rpm) and that of fig.8 (d) is 13.31 ms (9000 rpm).

The power around 300 Hz increases by three times or more from fig.8 (a) to fig.8 (c) in turns. In fig.8 (d), the power around 300 Hz decreases slightly, however, the power around 600 Hz becomes larger than that around 300 Hz.

These increments in power demonstrate the enhancement of the energy generated at the combustion process, namely, the increase of the combustion ratio of the fuel.

The period of fig.9 (a) is 8.18 ms (14700 rpm), that of fig.9 (b) is 8.32 ms (14400 rpm), that of fig.9 (c) is 8.16 ms (14700 rpm) and that of fig.9 (d) is 8.18 ms (14700 rpm).

The power around 900 Hz increases by four times from fig.9 (a) to fig.9 (d) by turns. Therefore, it is obvious that the energy generated at the combustion process increases even in the top range of the revolution of the engine.

Because the obtained power is the mean power of four short intervals, it may fluctuate with time. Therefore, the power spectra were obtained from the different range in the whole range of the waveform (200 ms) and compared each other. The power spectra of three ranges including the partially duplicated range were obtained with the data of the revolution from 6000 rpm to 9000 rpm, and four ranges with those of the revolution over 14000 rpm. In each range, the enhancement of the power from the aforementioned condition (1) to the aforementioned condition (4) was confirmed.

As mentioned above, the fuel droplet micronizer can enhance the generation of energy at the combustion process of the engine. In addition, the engine equipped with the fuel droplet micronizer can keep the power stable and serve for comfortable driving.

## Claims

1. A fuel droplet micronizer (30) for pulverizing the fuel droplet fed to an internal combustion engine, comprising:
a micronization assistance part (32) composed of one or plural filament-like materials parallel to each other, and
a ring (33) for fixing the both ends of the filament-like materials, wherein
the fuel droplet micronizer (30) is placed in an intake tube (10) feeding the mixture of air and the fuel droplet ejected from an ejection apparatus into the internal combustion engine, and is installed between an ejection port (20) of the fuel ejection apparatus for ejecting the fuel droplet into the intake tube (10) and an end of the intake tube (10), and
the micronization assistance part (32) is disposed in a plane perpendicular to the axis of the intake tube, and the micronization assistance part (32) covers the cross-section of the intake tube (10) so that the fuel droplets in the mixture are pulverized by colliding with the micronization assistance part (32) and are then fed to the internal combustion engine, **characterized in that**
the micronization assistance part (32) is made of tungsten filaments and the ring (33) is made of copper, and
the micronization assistance part (32) is electrically connected with an electric source (35) in order to keep the electric potential of the micronization assistance part (32) higher than the electric potential of the intake tube (10).

## Patentansprüche

1. Ein Kraftstoff-Tröpfchen-Mikronisierer (30) zum Pulverisieren des Kraftstofftröpfchens, das einem internen Verbrennungsmotor zugeführt wird, umfassend:
ein Mikronisierungshilfsteil (32) bestehend aus einem oder mehreren filamentartigen Materialien, die parallel zueinander angeordnet sind, und
einen Ring (33) zum Fixieren der beiden Enden der filamentartigen Materialien, wobei der Kraftstoff-Tröpfchen-Mikronisierer (30) in einem Aufnahmerohr (10) platziert ist, das das Gemisch aus Luft und dem aus einem Ausstoß-Vorrichtung ausgestoßene Kraftstoff-Tröpfchen dem internen Verbrennungsmotor zuführt, und ist zwischen einer Ausstoßöffnung (20) des Kraftstoffausstoß-Vorrichtung zum Ausstoßen des Kraftstofftröpfchens in das Aufnahmerohr (10) und einem Ende des Aufnahmerohrs (10) installiert, und
das Mikronisierungshilfsteil (32) ist in einer Ebene senkrecht zu der Achse des Aufnahmerohrs vorgesehen, und das Mikronisierungshilfsteil (32) deckt den Querschnitt des Aufnahmerohrs (10) so ab, dass die Kraftstofftröpfchen in der Mischung pulverisiert werden, indem sie mit dem Mikronisierungshilfsteil (32) kollidieren und werden dann dem internen Verbrennungsmotor zugeführt, **dadurch gekennzeichnet, dass**
das Mikronisierungshilfsteil (32) aus Wolframfäden hergestellt ist und der Ring (33) ist aus Kupfer hergestellt, und
das Mikronisierungshilfsteil (32) ist elektrisch mit einer elektrischen Quelle (35) verbunden, um das elektrische Potenzial des Mikronisierungshilfsteils (32) höher als das elektrische Potenzial des Aufnahmerohrs (10) zu halten.

## Revendications

1. Microniseur (30) de gouttelettes de combustible permettant de pulvériser les gouttelettes de combustible apportées à un moteur à combustion interne, comportant :
une partie (32) d'assistance à la micronisation composée d'un ou de plusieurs matériaux de type filament, parallèles les uns aux autres et
une bague (33) permettant de fixer les deux extrémités des matériaux de type filament, dans lequel
le microniseur (30) de gouttelettes de combustible est placé dans un tube d'admission (10) apportant le mélange d'air et les gouttelettes de combustible éjectées d'un appareil d'éjection dans le moteur à combustion interne et est installé entre un orifice d'éjection (20) de l'appareil d'éjection de combustible pour éjecter les gouttelettes de combustible dans le tube d'admission (10) et une extrémité du tube d'admission (10) et
la partie (32) d'assistance à la micronisation est disposée dans un plan perpendiculaire à l'axe du tube d'admission et la partie (32) d'assistance à la micronisation couvre la section transversale du tube d'admission (10), de sorte que les gouttelettes de combustible dans le mélange soient pulvérisées par collision avec la partie (32) d'assistance à la micronisation, puis qu'elles soient apportées au moteur à combustion interne, **caractérisé en ce que**
la partie (32) d'assistance à la micronisation est fabriquée en filaments de tungstène et la bague (33) est fabriquée en cuivre et
la partie (32) d'assistance à la micronisation est raccordée électriquement à une source électrique (35) afin de maintenir le potentiel électrique de la partie (32) d'assistance à la micronisation plus élevée que le potentiel électrique du tube d'admission (10).
